# EUROPÄISCHE PATENTSCHRIFT

(11) **EP 0 599 801 B1**
(45) Veröffentlichungstag und Bekanntmachung des Hinweises auf die Patenterteilung: **15.10.1997**
(21) Anmeldenummer: 93890218.6
(22) Anmeldetag: 04.11.1993
(51) Int. Cl.: B03B 9/06

(54) **Anlage zur Aufbereitung von Baumischschutt**
Plant for treating building rubble
Installation pour le traitement de décombres

(30) Priorität: 27.11.1992 AT 2349/92
(43) Veröffentlichungstag der Anmeldung: 01.06.1994
(73) Patentinhaber: SBM WAGENEDER Gesellschaft m.b.H., A-4663 Laakirchen (AT)
(72) Erfinder: Beisskammer, Alfred, Ing., A-4663 Laakirchen (AT); Haider, Bruno, Dipl.-Ing., Dr., A-4810 Gmunden (AT); Hofstätter, Albert, Ing., A-4810 Gmunden (AT); Lehner, Günther, A-4663 Laakirchen (AT); Nussbaumer, Karl, Ing., A-4663 Laakirchen (AT); Hackmair, Walter, A-4812 Pinsdorf (AT)
(74) Vertreter: Köhler-Pavlik, Johann, Dipl.-Ing.

(56) Entgegenhaltungen:
- EP-A- 0 173 934
- EP-A- 0 282 048
- EP-A- 0 439 701
- DE-A- 3 248 493
- K.O. TILTMANN: 'RECYCLING BETRIEBLICHER ABFÄLLE' 1991 , WEKA FACHVERLAGE GMBH , KISSING DE * Teil 4/4.1.4.2.2, Seiten 32-37, 'Bauschuttaufbereitungsanlage System "HAZEMAG" '*
- AUFBEREITUNGS TECHNIK. Bd. 32, Nr. 1 , Januar 1991 , WIESBADEN DE Seiten 31 - 33 G. SCHUMACHER: 'Recycling-Baustoffe aus Deponie- und Abbruchmaterial'
- STICHTING C.R.O.W. WERKGROEP A1 "BOUW- EN SLOOPAFVAL": 'Resten zijn geen afval (meer) - Puingranulaten'; Publikatie 12, ISBN 90-6628-072-7, seiten 1-24
- AUFBEREITUNGS TECHNIK. Bd. 33, Nr. 2 , Februar 1992 , WIESBADEN DE Seiten 93 - 96 P. GUNTERMANN: 'CRG Cottbus - eine anpassungsfähige, vielseitige Bauschutt-Recyclinganlage nach modernstem Konzept'
- STICHTING C.R.O.W. WERKGROEP A1 "BOUW- EN SLOOPAFVAL": 'Resten zijn geen afval (meer) - Puingranulaten'; Publikatie 12, ISBN 90-6628-072-7, seiten 1-24 October 1988, STICHTING C.R.O.W., EDE NL

## Beschreibung

Die Erfindung betrifft eine Anlage nach dem Oberbegriff des Patentanspruches 1.

Die Literaturstelle K.O.Tiltmann "Recycling betrieblicher Abfälle" beschreibt eine solche Anlage zur Aufbereitung von Baumischschutt, bei welcher der Baumischschutt vorerst vorsortiert und danach in mehrere Fraktionen im Gegenstrom gesichtet wird, wobei Metallteile durch Magnete ausgeschieden werden.

Die bekannten Anlagen erfüllen nicht die neuzeitlichen Anforderungen für die Aufbereitung von Baumischschutt hinsichtlich Kostenaufwand und Effizienz.

Aufgabe der Erfindung ist die Schaffung einer Maßnahme, durch welche mit einfachen Mitteln der Druck im Windsichter gesteuert werden kann, um je nach Bedarf Fraktionen gewünschter Qualität erzielen zu können.

Diese Aufgabe wird erfindungsgemäß durch eine Anlage nach dem kennzeichnenden Teil des Patentanspruches 1 gelöst.

Durch die Maßnahmen nach Anspruch 2 und insbesondere nach Anspruch 4 wird der Trennungseffekt wesentlich begünstigt. Durch die Maßnahme nach Anspruch 5 wird eine Regelung der Sichtungs- bzw. Einblasgeschwindigkeit erzielt.

Durch die Maßnahmen nach den Ansprüchen 3 und 6 wird die Qualität der Sichtung weiter verbessert.

Die Maßnahme nach Anspruch 7 bewirkt den Ausfall des schweren Kornes.

Durch die Maßnahme nach Anspruch 8 wird der in der Luft noch vorhandene Staub abgeschieden.

Die Erfindung wird anhand der Zeichnungen näher erläutert, in welchen
Fig. 1 schematisch die Art der Sortierung,
Fig. 2 ein Schema der gesamten Anlage,
Fig. 3 eine Variante der Anlage und
Fig. 4 eine vereinfachte Darstellung eines Windsichters zeigt.

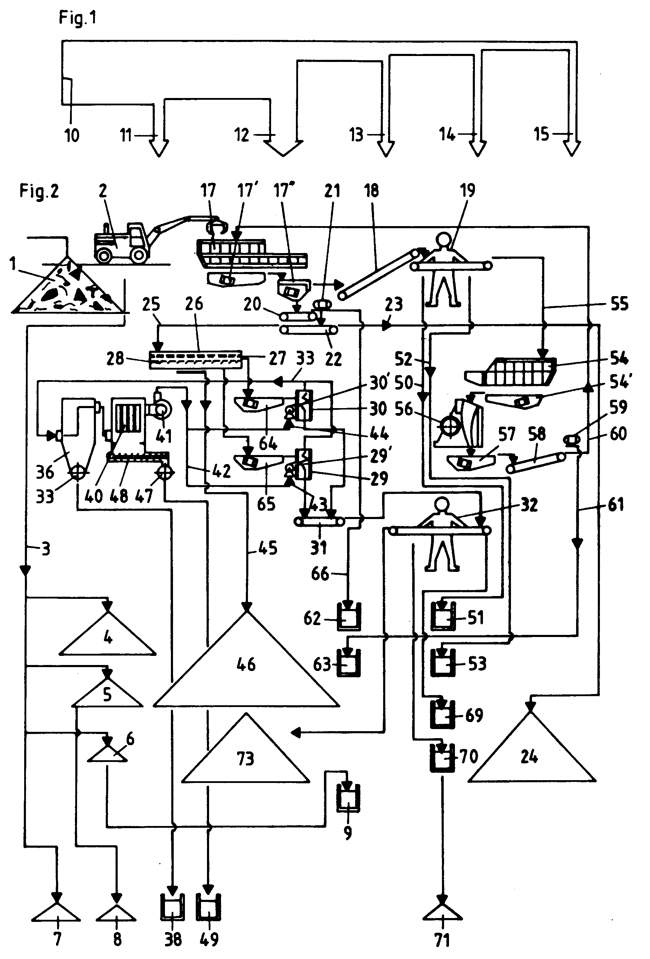

Die erfindungsgemäße Anlage kann beispielsweise beim Abriß von Häusern eingesetzt werden, bei dem das Mauerwerk einschließlich der Fenster und Fensterstöcke, Türen und Türstöcke, alter Möbel, Luster, Kücheneinrichtungen, Badezimmereinrichtungen u.a. auf eine Halde 1 (Fig. 2) in freiem Gelände, z.B. mittels LKW, gebracht wird. Dort erfolgt eine Vorsortierung, im vorliegenden Falle mittels eines Greiferbaggers 2, welcher große sperrige Holz-, Stein-, Metall-und Reststoffteile abtrennt, wie mit Pfeil 3 angedeutet, vorzugsweise getrennt nach Steinen, Holz, Metall und Reststoffen auf Halden 4 bzw. 5 bzw. 6 und 7 gebracht werden, wobei aus dem Metall der Halde 6 Eisen auf eine Halde 9, und lackiertes Holz aus der Halde 5 auf einer Halde 8 deponiert wird. Anstelle der einen oder anderen Halde oder aller Halden können Container vorgesehen sein.

In Fig. 1 ist das Aufgabematerial durch einen Balken 10 und die jeweilige Abscheidung durch Pfeile 11 bis 15 angedeutet. Die zuvor erwähnte Vorsortierung, welche mit Pfeil 11 angedeutet ist, umfaßt etwa 20% des Aufgabematerials. Aus dem restlichen Gut werden etwa 65% zur weiteren Trennung abgesiebt (Pfeil 12), während der Rest nach Abscheidung von Eisen (2% - Pfeil 13) zu einer Handsortierung gelangt, wo etwa 2% des Gutes abgeschieden werden (Pfeil 14), während der Rest, wie mit Pfeil 15 angedeutet ist, einer Zerkleinerung zugeführt wird.

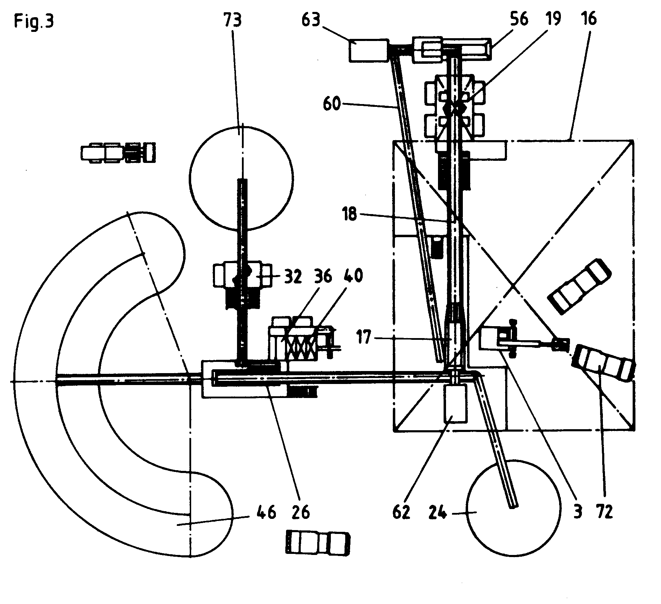

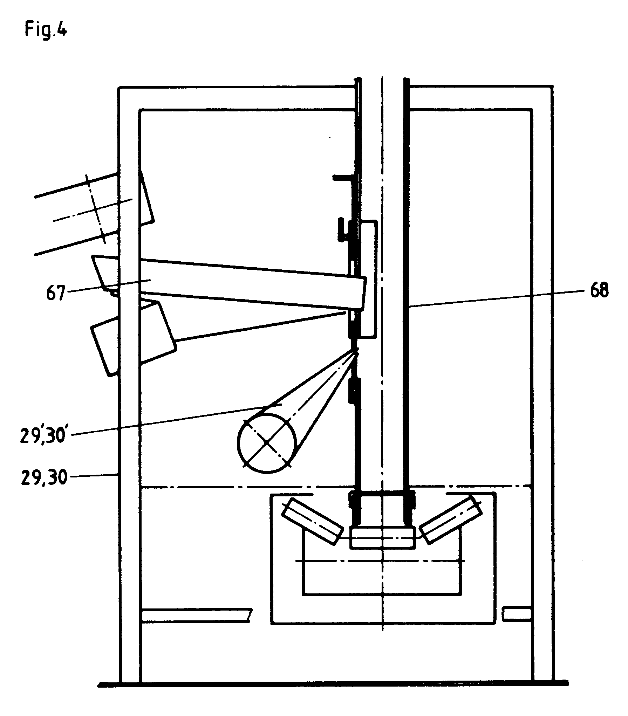

Die Vorsortierung, bei welcher ein Gut größer als 40 bis 50cm abgetrennt wird, erfolgt vorzugsweise im Freien, die weitere Trennung in einer Lagerhalle, welche in Fig. 3 mit 16 bezeichnet ist. Dort wird das vorsortierte Gut vorerst einer Vibrationsrinne 17 zugeführt, welche von zwei gegenläufigen Unwuchtmotoren 17' angetrieben wird und das Material auflockert und einem Vorabscheiderost 17'' zuführt, der es in zwei Fraktionen trennt, von welchen die Fraktion mit größerer Körnung, z.B. über 30 oder über 80 mm, über ein Förderband 18 einer Handsortierung 19 zugeführt wird, während das restliche Material auf ein Förderband 20 gelangt, von wo es unterhalb eines Überbandelektromagnetabscheiders 21 auf ein reversierbares Förderband 22 abgeworfen wird, von welchem es direkt über ein schwenkbares Förderband in Richtung des Pfeiles 23 einer Halde 24 oder bei größerer Verunreinigung in Richtung des Pfeiles 25 einer Sortieranlage, vorzugsweise einem Recyclingsieb 26, zugeführt wird. In der Sortieranlage bzw. im Recyclingsieb 26 ist mindestens ein Sieb, vorzugsweise zwei Siebe 27 und 28 vorgesehen, welche eine Trennung des Gutes in Fraktionsteile von etwa 0 bis 12mm und 12 bis 30mm, allenfalls auch 30 bis 80mm bewirken. Die kleinste Fraktion, im vorliegenden Fall etwa 0 bis 12mm, welche in der Sortieranlage 26 anfällt, wird, wie mit Pfeil 45 angedeutet, einer Halde 46, einem Container od. dgl. zugeführt. Die Fraktion 12 bis 30mm und die allfällige Fraktion 30 bis 80mm werden über Förderbänder 64, 65 und Rüttelrinnen 67 (Fig. 4) in Abwurfschurren von Windsichtern 29 bzw. 30 abgeworfen.

In diesen Schurren 67 wird im Gegenstron Luft durchgesaugt, um die Leichtfraktionen vom hochwertigeren Gestein im freien Fall zu trennen. Dieser Trennungseffekt wird durch eine vorzugsweise bis zu 180° schwenkbare Einblasdüse 29' bzw. 30', welche unter oder in der Aufgaberinne 67 angeordnet ist und mit hoher Geschwindigkeit Luft durch den Materialstrom drückt, unterstützt. Durch die hohe Einblasgeschwindigkeit wird, bedingt durch die Körnungsbandbreite, auch Gesteinskorn mitgerissen. Eine Beruhigungsstrecke über der Aufgabe bewirkt den Ausfall des schweren Korns und fällt mit dem übrigen Gestein auf ein Abzugsband. Mit einer Drosselklappe vor dem Absaugventilator und Einblasventilator kann die Sichtungs-bzw. Einblasgeschwindigkeit geregelt werden, um so den besten Sichtungseffekt zu gewährleisten.

Die leichtere Fraktion wird unmittelbar nach der Beruhigungsstrecke in einen Vorabscheider 36 geleitet, um die Grobanteile auszuscheiden. Das anfallende Material wird über eine Zellenradschleuse 33 in einen Container 38 ausgetragen. Die noch staubhältige Luft wird über einen Schlauchfilter 40 geführt und der Staub an den Filterschläuchen abgeschieden. Die gereinigte Luft mit einem Reingasstaubgehalt von max. 20 mg/Nm³ wird über einen Absaugventilator 41 und ein Abluftrohr ins Freie geblasen und/oder den Windsichtern 29, 30 im Kreislauf zugeführt. Die Abreinigung des Staubes von den Schläuchen erfolgt pneumatisch, mittels Druckluft. Der Filterstaub wird über eine Zellenradschleuse 47 und eine Austragsschnecke 48 in einen Container 49 ausgetragen.

An das pneumatisch abgereinigte Schlauchfilter sind auch alle staubemittierenden Förderbandaufgaben angeschlossen, um die Staubemission der Gesamtanlage zu minimieren.

Das Ventilatorausblasgeräusch wird in einem nachgeschalteten Kulissenschalldämpfer auf kleiner 75 dB(A) in 1m Abstand von der Ausblasöffnung gedämpft.

Das gesichtete Gut aus den beiden Windsichtern 29, 30 mit einer Körnung von 12 bis 30mm bzw. einer Gesamtkörnung von 12 bis 80mm wird über ein Förderband 31 einer Handsortierung 32 zugeführt.

Die Sortieranlage 26 mit den Windsichtern 29, 30 bildet einen wesentlichen Teil der erfindungsgemäßen Anlage, in der nichtmineralische Stoffe wie Papier, Aluminium und andere Metalle, abgeschieden werden. Die Fraktion 0 bis 12mm gelangt aus der Sortieranlage 26, wie mit Pfeil 45 angedeutet, auf eine Halde 46.

Die der Handsortierung 19 zugeführte Fraktion von etwa 30 bzw. 80 bis 300mm oder mehr wird händisch aussortiert, wobei Holz, wie mit Pfeil 50 angedeutet, einem Container 51 und Nichteisenmetalle sowie verbleibende Reststoffe einem Container 53 zugeführt werden. Das verbleibende Überkorn über 30 bzw. 80mm wird, wie mit Pfeil 55 angedeutet, über eine Rinne 54 und eine durch Unwuchtmotore angetriebene Trennanlage 54', in welcher noch verbleibende Verunreinigungen abgeführt werden können, einem Brecher 56 zugeführt, welcher als Backenbrecher oder Prallbrecher ausgebildet sein kann, in welchem das Gut auf kleinere Stücke entsprechend der gewünschten Größe zerkleinert werden kann. Das zerkleinerte Gut gelangt über eine ebenfalls durch Unwuchtmotore angetriebene Rinne 57 od dgl. auf ein Förderband 58 mit einem Elektromagnetabscheider 59, vorzugsweise einem Überbandmagnetabscheider, von wo es, wie mit Pfeil 60 angedeutet ist, dem Vorabscheiderost 17 zugeführt wird.

Das von den Magnetabscheidern 21 und 59 abgeschiedene Eisen wird, wie mit Pfeilen 66 bzw. 61 angedeutet ist, jeweils in einen Container 62 bzw. 63 eingebracht.

Das in der vorzugsweise von Hand aus betriebenen Sortieranlage 32 aussortierte Holz wird einem Container 69 zugeführt, während Reststoffe in einen Container 70 gelangen und hierauf allenfalls einer Halde 71 zugeführt werden. Die verbleibende Fraktion 12 bis 30 bzw. 80mm gelangt auf die Halde 73.

Der Materialaustrag der unkontrollierten Fraktion 0 bis 12mm ist als Kabelsand, Füllsand etc. wieder verwertbar.

Der Materialaustrag der gereinigten und kontrollierten Fraktion 12 bis 80mm ist als Recyclingmaterial der Güterklasse RCL1 oder RCL2 wieder verwertbar.

Selbstverständlich können im Rahmen der Erfindung verschiedene konstruktive Änderungen vorgenommen werden. So kann die Anlage so ausgelegt sein, daß die angegebenen Grenzwerte der Fraktionen um 5 bis 15%, z.B. 10%, nach oben und/oder unten verschoben sind. Es besteht auch die Möglichkeit, daß die Siebe und andere Bestandteile der Anlage, wie Rinnen, Bänder, Magnete u.a. austauschbar im Falle der Abnützung oder bei Umstellung der Anlage auf andere Fraktionswerte auswechselbar sind.

Schließlich ist es, wie Fig. 3 zeigt, denkbar, das Abrißmaterial bzw. Aufgabematerial mittels LKW 72 in die Lagerhalle 16 einzubringen, in welcher der Greiferbagger 3 die Vorsortierung durchführt. Im übrigen sind die der Anlage nach Fig. 2 entsprechenden Teile mit den gleichen Bezugszeichen versehen.

## Patentansprüche

1. Anlage zur Aufbereitung von Baumischschutt, welche Einrichtungen zur Vorsortierung des Aufgabematerials, einen Vorabscheiderost (17'') zur Trennung des vorsortierten Materials in mindestens zwei Fraktionen, eine Fördereinrichtung, z.B. ein Förderband (18), zum Transport der größeren Fraktion, eines Überkornes, auf eine Sortieranlage, z.B. eine Handsortierung (19) zur Aussortierung von Holz und Nichteisenmetallen und darauffolgender Zerkleinerungseinrichtung des Überkorns, und eine zweite Fördereinrichtung (20, 22) zum Transport der kleineren Fraktion auf einen mehrstufigen Rost, ein Recyclingsieb (26) od. dgl. zur weiteren Trennung des Gutes in mindestens zwei Fraktionen, und im Anschluß an diesen bzw. dieses mindestens einen Windsichter (29, 30) zur Abscheidung der Leichtstoffe vorgesehen ist, welcher nach dem Fallrohrprinzip arbeitet, aufweist, dadurch gekennzeichnet, daß jeder Windsichter (29, 30) mit einer schwenkbaren Düse (29', 30') zur Steuerung des Druckes versehen ist.

2. Anlage nach Anspruch 1, dadurch gekennzeichnet, daß die Düsen (29', 30') als Flachdüsen ausgebildet sind.

3. Anlage nach Anspruch 1, dadurch gekennzeichnet, daß jedem Windsichter (29, 30) Rüttelrinnen (67) vorgeschaltet sind, aus welchen die Fraktion in Abwurfschurren gelangt.

4. Anlage nach Anspruch 2, dadurch gekennzeichnet, daß die Flachdüse (29', 30') bis zu 180° schwenkbar ist.

5. Anlage nach Anspruch 4, dadurch gekennzeichnet, daß zur Regelung der Sichtungs- bzw. Einblasgeschwindigkeit vor einem Absaugventilator und Einblasventilator eine Drosselklappe vorgesehen ist.

6. Anlage nach Anspruch 2, dadurch gekennzeichnet, daß die Flachdüse (29', 30') unter oder in der Rüttelrinne (67) angeordnet ist.

7. Anlage nach Anspruch 1, dadurch gekennzeichnet, daß im Anschluß an den Windsichter (29, 30) eine Beruhigungsstrecke vorgesehen ist, welcher ein Vorabscheider (36) mit einer Zellenradschleuse (33) nachgeschaltet ist.

8. Anlage nach Anspruch 7, dadurch gekennzeichnet, daß im Anschluß an den Vorabscheider (36) ein Schlauchfilter (40) vorgesehen ist.

## Claims

1. Plant for treating building rubble, which has devices for presorting the charge, a preseparating screen (17'') for separating the presorted material into at least two fractions, a conveyor, e.g. a conveyor belt (18), for transporting the larger fraction, an oversize material, to a sorting installation, e.g. a manual sorting installation (19) for eliminating wood and nonferrous metals and a following comminuting device for the oversize material, and a second conveyor (20, 22) for conveying the smaller fraction to a multistage screen, a recycling screen (26), etc. for the further separation of the material into at least two fractions, and following onto the same at least one air separator (29, 30) for separating the light materials and which operates according to the downpipe principle, characterized in that each air separator (29, 30) is provided with a pivotable nozzle (29', 30') for controlling the pressure.

2. Plant according to claim 1, characterized in that the nozzles (29', 30') are constructed as flat nozzles.

3. Plant according to claim 1, characterized in that upstream of each air classifier (29, 30) are provided vibrating chutes (67) from which the fraction passes into throw-off chutes.

4. Plant according to claim 2, characterized in that the flat nozzle (29', 30') is pivotable up to 180°.

5. Plant according to claim 4, characterized in that upstream of a suction fan and injection fan a throttle valve is provided for regulating the separating or injection speed.

6. Plant according to claim 2, characterized in that the flat nozzle (29', 30') is positioned below or in the vibrating chute (67).

7. Plant according to claim 1, characterized in that following onto the air classifier (29, 30) is provided a steady flow zone, which is followed by a preseparator (36) with a bucket wheel lock (33).

8. Plant according to claim 7, characterized in that following onto the preseparator (36) is provided a filter bag (40).

## Revendications

1. Installation pour le traitement de décombres qui comporte des dispositifs pour le triage préalable du matériau de charge, une grille de séparation préalable (17'') pour séparer le matériau trié préalablement en au moins deux fractions, un dispositif de transport, par exemple une courroie de transport (18) pour le transport de la fraction plus grande, d'un déclassé supérieur, sur une installation de triage, par exemple un dispositif de triage manuel (19) pour trier le bois et les métaux non ferreux, suivi d'un dispositif de fragmentation du déclassé supérieur, et un deuxième dispositif de transport (20, 22) pour le transport de la fraction plus petite sur une grille à plusieurs étages, une crible de recyclage (26) ou analogue pour la séparation ultérieure du matériau en au moins deux fractions, suivi d'au moins un séparateur à air (29, 30) pour la séparation des matériaux légers, qui fonctionne selon le principe du tuyau de chute, caractérisée en ce que chaque séparateur à air (29, 30) est pourvu d'une buse pivotante (20', 30') pour commander la pression.

2. Installation selon la revendication 1, caractérisée en ce que les buses (20', 30') sont réalisées sous forme de buses plates.

3. Installation selon la revendication 1, caractérisée en ce que des goulottes de vibration (67) sont montées en amont de chaque séparateur à air (29, 30) à partir desquelles les fractions arrivent dans des goulottes d'éjection.

4. Installation selon la revendication 2, caractérisée en ce que la buse plate (29', 30') est apte à pivoter jusqu'à 180°.

5. Installation selon la revendication 4, caractérisée en ce qu'il est prévu, pour régler la vitesse de séparation et, respectivement de soufflage, devant un ventilateur d'aspiration et un ventilateur de soufflage une soupape d'étranglement.

6. Installation selon la revendication 2, caractérisée en ce que la buse plate (29', 30') est disposée en dessous ou dans la goulotte de vibration (67).

7. Installation selon la revendication 1, caractérisée en ce qu'il est prévu à la suite du séparateur à air (29, 30) un trajet tranquilliseur à la suite duquel est monté un séparateur préalable (36) avec une écluse à roue cellulaire (33).

8. Installation selon la revendication 7, caractérisée en ce qu'il est prévu à la suite du séparateur préalable (36) un filtre à manche (40).
